# FASCICULE DE BREVET EUROPEEN

(11) **EP 1 264 113 B1**
(45) Date de publication et mention de la délivrance du brevet: **12.05.2004**
(21) Numéro de dépôt: 01913944.3
(22) Date de dépôt: 07.03.2001
(51) Int. Cl.: F16C 27/06, F16C 35/073, B62D 1/16, F16C 25/08

(54) **PALIER A ROULEMENT DE COLONNE DE DIRECTION POUR VEHICULES AUTOMOBILES**
WÄLZLAGER FÜR KRAFTFAHRZEUG- LENKSÄULEN
ANTIFRICTION BEARING FOR MOTOR VEHICLE STEERING COLUMN

(30) Priorité: 13.03.2000 FR 0003180
(43) Date de publication de la demande: 11.12.2002
(73) Titulaire: SKF FRANCE, F-92140 Clamart (FR)
(72) Inventeur: COLLIGNON, Bertrand, B-5101 Erpent (BE); LIVERATO, Yves-André, F-37370 St Paterne Racan (FR)
(74) Mandataire: Casalonga, Axel
(86) Numéro de dépôt international: PCT/FR2001/000674
(87) Numéro de publication internationale: WO 2001/069098

(56) Documents cités:
- DE-A- 3 808 556
- FR-A- 2 756 885
- FR-A- 2 789 134
- US-A- 3 934 956
- US-A- 5 193 917
- US-A- 5 538 282

## Description

La présente invention relève du domaine des paliers à roulement, notamment pour colonnes de direction de véhicules automobiles.

Les colonnes de direction comprennent généralement un arbre dont une extrémité est solidaire d'un volant d'entraînement actionné par le conducteur du véhicule et dont l'autre extrémité est solidaire d'organes mécaniques destinés à commander le positionnement angulaire des roues du véhicule. L'arbre de la colonne de direction est monté dans un logement de forme tubulaire fixe par l'intermédiaire de deux paliers à roulement, généralement à billes à contact oblique, montés en opposition.

Les bagues extérieures des paliers à roulement sont solidarisées avec le logement de la colonne de direction et les bagues intérieures sont montées sur l'arbre de colonne par l'intermédiaire d'une bague dite de tolérance. Une bague de tolérance sert d'interface entre l'arbre et une bague intérieure, la section de l'arbre pouvant être circulaire mais aussi polygonale, et compense d'éventuels défauts géométriques entre ces deux pièces.

L'ensemble fonctionne à jeu nul grâce à un effort axial de précontrainte exercé sur les bagues de tolérance par un organe élastique axialement qui peut être, par exemple, un ressort, une rondelle élastique, etc.

Généralement, l'effort axial de précontrainte est exercé sur la bague de tolérance d'un seul des deux paliers à roulement, la bague de tolérance du deuxième palier à roulement étant immobilisée axialement dans la direction de cet effort. La bague de tolérance du premier palier à roulement pouvant coulisser axialement sur l'arbre, l'effort axial exercé par l'organe élastique axialement tend à rapprocher axialement l'une de l'autre les bagues intérieures des deux paliers à roulement.

On rattrape ainsi les jeux internes des roulements et on assure le contact permanent sans jeu et sous précharge entre les bagues et les éléments roulants du palier à roulement.

Des paliers à roulement connus pour colonnes de direction comprennent une pièce supplémentaire en forme de rondelle frein pour positionner la bague de tolérance sur l'arbre de la colonne de direction.

Ces paliers à roulement comprennent donc généralement une bague extérieure solidaire du logement, une bague intérieure en contact avec l'arbre, une rangée d'éléments roulants disposés entre les deux bagues et en contact avec celles-ci, une bague de tolérance, généralement en polyamide, qui assure la liaison entre la bague intérieure et l'arbre de la colonne de direction et est capable de transmettre des efforts axiaux à la bague intérieure pour maintenir le palier à roulement en précontrainte interne permanente, un organe de mise en précontrainte à élasticité axiale tel qu'une rondelle ondulée venant en appui axial contre la bague de tolérance, et une rondelle frein servant à fermer l'ensemble du palier à roulement et à le bloquer axialement sur l'arbre tout en maintenant une précharge axiale sur la bague de tolérance afin d'obtenir un fonctionnement sans jeu du palier à roulement.

De façon conventionnelle, les différentes pièces d'un tel palier à roulement ne sont réunies que lors de leur montage dans le dispositif de colonne de direction. Il existe donc un risque de perte d'éléments lors des manipulations et du montage de l'ensemble dans le dispositif de colonne de direction. De plus, plusieurs stocks de pièces différentes doivent être gérés.

Pour ces différentes raisons, on cherche à constituer un ensemble indémontable comprenant les bagues, les éléments roulants, la bague de tolérance et la rondelle frein de façon à pouvoir assembler ledit ensemble avant son montage dans le dispositif de colonne de direction et ainsi de livrer des paliers à roulement prêts à être montés sans risque de perte de pièces.

On connaît par le document FR-A-2 756 885 un palier à roulement de colonne de direction dont la bague comprend des déformations radiales de retenue de la rondelle-frein qui préviennent un démontage non souhaité du palier avant son installation dans le dispositif de colonne de direction. Ce palier donne satisfaction.

Du document US 5 193 917 A (figure 5) est connu un palier à roulement à contact oblique pour colonne de direction comportant une bague extérieure, une bague intérieure, des billes et une bague de tolérance.

Toutefois, un besoin est apparu de filtrer plus efficacement les vibrations qui remontent vers le volant du véhicule tout en pouvant utiliser différents types de rondelle-frein, le reste du palier étant standard.

La présente invention a pour objet de satisfaire ce besoin.

L'invention a également pour objet de proposer un palier à roulement amélioré.

L'invention a par ailleurs pour objet de proposer un palier à roulement intégrant des moyens élastiques axialement pour exercer un effort axial de précontrainte permettant un fonctionnement sans jeu de l'ensemble comprenant les deux paliers à roulement montés de part et d'autre du logement d'une colonne de direction.

Le palier à roulement à contact oblique selon l'invention est notamment destiné à une colonne de direction de véhicule automobile, et est du type comprenant une bague extérieure pourvue d'un chemin de roulement, une bague intérieure pourvue d'un chemin de roulement, une rangée d'éléments roulants disposés entre les chemins de roulement desdites bagues, une bague de tolérance assurant la liaison de la bague intérieure avec l'arbre de la colonne de direction, et un élément d'amortissement disposé en contact avec la bague de tolérance, à l'extrémité axiale du palier opposée aux éléments roulants, l'élément d'amortissement étant distinct de la bague de tolérance.

Le palier à roulement peut comprendre une rondelle frein pour bloquer le palier axialement sur l'arbre, l'élément d'amortissement étant disposé axialement entre la rondelle frein et la bague de tolérance.

Dans un mode de réalisation de l'invention, l'élément d'amortissement est mobile axialement par rapport à la bague de tolérance.

Dans un mode de réalisation de l'invention, l'élément d'amortissement est disposé autour d'une partie de la bague de tolérance située à l'opposé des éléments roulants.

De préférence, l'élément d'amortissement comprend des moyens de retenue axiale sur la bague de tolérance. On évite ainsi une séparation intempestive de l'élément d'amortissement et de la bague de tolérance, et on facilite l'assemblage du palier, l'élément d'amortissement et la bague de tolérance formant un sous-ensemble, avantageusement pré-assemblé.

Dans un mode de réalisation de l'invention, l'élément d'amortissement est réalisé en matériau souple, préférablement synthétique ou à base de caoutchouc.

Dans un mode de réalisation de l'invention, l'élément d'amortissement comprend un insert métallique, notamment pour accroître sa rigidité.

Dans un mode de réalisation de l'invention, l'élément d'amortissement comprend une face radiale destinée à l'appui sur la rondelle frein.

Pour intégrer au palier à roulement également les moyens permettant d'exercer un effort axial de précontrainte, une rondelle élastique axialement peut être intercalée axialement entre la bague de tolérance et l'élément d'amortissement.

Dans un mode de réalisation de l'invention, le palier comprend une rondelle disposée entre l'élément d'amortissement et la rondelle élastique, notamment pour fournir une surface d'appui à la rondelle élastique

Dans un mode de réalisation de l'invention, l'élément d'amortissement est en appui direct sur la bague de tolérance et assure la précontrainte axiale du roulement.

L'invention sera mieux comprise à l'étude de la description détaillée de quelques modes de réalisation pris à titre d'exemples nullement limitatifs et illustrés par les dessins annexés, sur lesquels :
la figure 1 est une vue en coupe axiale d'un palier à roulement selon un premier mode de réalisation de l'invention;
la figure 2 est une vue en coupe axiale du palier à roulement de la figure 1 après montage;
la figure 3 est une demi-vue en coupe axiale d'une variante du palier à roulement de la figure 2;
la figure 4 est une vue en coupe axiale d'un palier à roulement selon un second mode de réalisation de l'invention;
la figure 5 est une vue en coupe axiale d'un palier à roulement selon un troisième mode de réalisation de l'invention; et
la figure 6 est une vue de face en élévation de l'élément d'amortissement du palier à roulement de la figure 5.

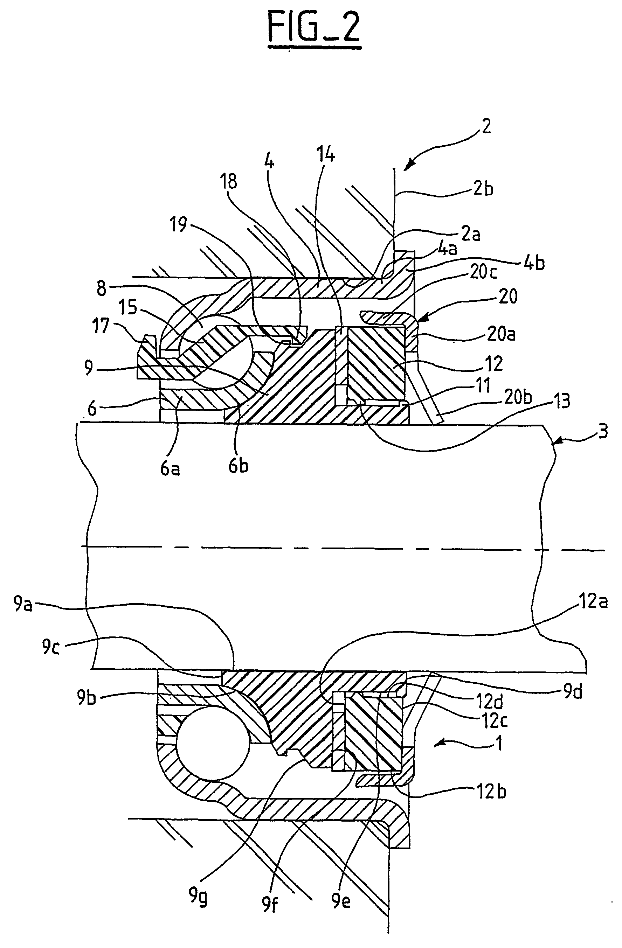

Comme on peut le voir sur la figure 2, le palier à roulement 1 est disposé entre un logement fixe 2 et comprenant un alésage 2a et une surface frontale 2b, et un arbre tournant 3.

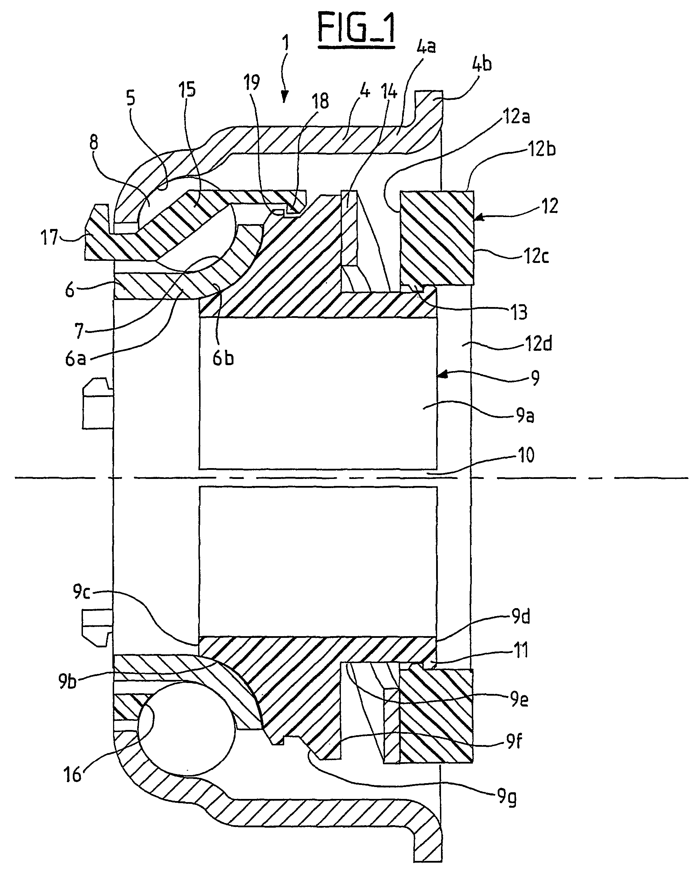

Comme on peut le voir sur les figures 1 et 2, le palier à roulement 1 comprend une bague extérieure 4 définissant un chemin de roulement 5, une bague intérieure 6 définissant un chemin de roulement 7, et une rangée d'éléments roulants 8, par exemple des billes, disposés entre le chemin de roulement intérieur 5 de la bague extérieure 4 et le chemin de roulement extérieur 7 de la bague intérieure 6. Les bagues extérieure 4 et intérieure 6 sont réalisées en tôle emboutie et subissent un traitement thermique pour leur conférer la dureté nécessaire.

La bague extérieure 4 comprend une portion cylindrique 4a s'étendant à partir de la rangée d'éléments roulants 8 en direction de la surface frontale 2b du logement 2, et une collerette radiale 4b s'étendant à partir de l'extrémité libre de la portion cylindrique 4a, vers l'extérieur. La portion cylindrique 4a est en contact avec l'alésage 2a du logement 2 et la collerette radiale 4b est en contact avec la surface frontale 2b du logement 2 et sert de butée de positionnement axial. La bague intérieure 6 comprend une portion cylindrique 6a destinée à être montée sur l'arbre 3 avec un certain jeu radial et une portion toroïdale 6b dont la surface externe forme le chemin 7.

Le palier à roulement 1 comprend une bague de tolérance élastique 9 réalisée en matériau synthétique moulé, par exemple en polyamide, et formant un anneau interrompu par une fente radiale 10. La fente radiale 10 permet à la bague de tolérance 9 de s'adapter aux variations dimensionnelles diamétrales de l'arbre 3 et de la bague intérieure 6, dues aux tolérances de fabrication et d'assurer ainsi par élasticité la liaison entre la bague intérieure 6 et l'arbre 3. La bague de tolérance 9 permet en outre de compenser les défauts de coaxialité du logement par rapport à l'arbre.

La bague de tolérance 9 comprend un alésage 9a en contact avec l'arbre 3, une portion de surface toroïdale 9b de forme complémentaire à la portion toroïdale 6b de la bague intérieure 6 et en contact avec celle-ci, une surface radiale annulaire 9c de faible dimension joignant l'alésage 9a et la portion de surface toroïdale 9b, une surface radiale annulaire 9d de faible dimension disposée à l'extrémité de l'alésage 9a opposée à la portion de surface toroïdale 9b, une surface cylindrique extérieure 9e s'étendant à partir de la surface radiale 9d en direction de la portion de surface toroïdale 9b et de diamètre sensiblement égal à celui du bord extérieur de la surface radiale 9d, une surface radiale annulaire 9f s'étendant vers l'extérieur à partir de la surface cylindrique extérieure 9e, et une surface extérieure 9g de liaison entre la surface radiale 9f et la portion de surface toroïdale 9b. Un rebord 11 en saillie radialement vers l'extérieur est prévu à l'extrémité de la surface cylindrique extérieure 9e adjacente à la surface radiale 9d. Le rebord 11 est monobloc avec la bague de tolérance 9. Le rebord 11 peut être continu dans le sens circonférentiel ou bien comporter des discontinuités pour se présenter alors sous la forme d'une succession d'ergots radiaux.

Le palier à roulement 1 comprend également un élément d'amortissement 12 distinct de la bague de tolérance. L'élément d'amortissement 12 est de forme annulaire, de section sensiblement rectangulaire avec deux surfaces radiales 12a et 12c et deux surfaces cylindriques 12b et 12d. La surface cylindrique extérieure 12b est sensiblement de même diamètre que la surface extérieure 9g. La surface cylindrique intérieure 12d est sensiblement de même diamètre que le rebord 11. Un bourrelet annulaire 13 en saillie radialement vers l'extérieur est formé sur la surface intérieure 12d. Sur la figure 1, on voit que l'élément d'amortissement 12 est monté en partie autour de la surface cylindrique extérieure 9e de la bague de tolérance 9. Le bourrelet 13 est disposé axialement entre le rebord 11 et la surface radiale 9f, le rebord 11 formant ainsi une butée axiale de retenue pour l'élément d'amortissement 12 par l'intermédiaire du bourrelet 13. Le bourrelet 13 peut être continu dans le sens circonférentiel ou bien comporter des discontinuités pour se présenter alors sous la forme d'une succession d'ergots radiaux. L'élément d'amortissement 12 est réalisé en matériau synthétique présentant des caractéristiques mécaniques adéquates pour assurer une atténuation des vibrations, notamment longitudinales, tout en transmettant un effort axial de précontrainte à la bague de tolérance 9. L'élément d'amortissement 12 assure aussi une fonction d'appui dans le sens axial.

Le palier à roulement 1 comprend également une rondelle ondulée 14 métallique à élasticité axiale disposée axialement entre la surface radiale 9f de la bague de tolérance 9 et la surface radiale 12a de l'élément d'amortissement 12 et radialement autour de la surface extérieure 9g de la bague de tolérance 9.

Une cage 15 de maintien de l'espacement circonférentiel des éléments roulants 8 est disposée entre la bague extérieure 4 et la bague intérieure 6. La cage 15 est réalisée en matériau synthétique moulé et est pourvue d'une pluralité d'alvéoles 16 destinées à recevoir les éléments roulants 8. La cage 15 se prolonge axialement à l'opposé de la collerette radiale 4b par une pluralité de crochets 17 circonférentiellement répartis et aptes à coopérer avec l'extrémité de la bague extérieure 4 adjacente au chemin de roulement 5. La cage 15 se prolonge du côté de la collerette radiale 4b par une pluralité de crochets 18 circonférentiellement répartis aptes à coopérer avec une surface correspondante 19 de la bague de tolérance 9 formée sur la surface de liaison 9g. La cage 15 assure donc par l'intermédiaire des crochets 17 et 18 le maintien d'un sous-ensemble indémontable comportant la cage 15, les billes 8, les bagues 4 et 6 et la bague de tolérance 9.

Le palier à roulement 1 comprend également une rondelle frein 20 (figure 2) réalisée en tôle, comprenant une portion radiale 20a en contact avec la surface radiale 12c de l'élément d'amortissement 12, une collerette oblique 20b s'étendant à partir de la portion radiale 20a radialement vers l'intérieur et axialement à l'opposé de l'élément d'amortissement 12, et une portion cylindrique 20c s'étendant en direction des éléments roulants 8 à partir de la périphérie de la portion radiale 20a et disposée radialement entre la portion cylindrique 4a de la bague extérieure 4 et la surface extérieure 12b de l'élément d'amortissement 12.

La collerette oblique 20b qui est ici découpée en languettes serre sur l'arbre 3 ce qui permet de déplacer la rondelle frein 20 en direction des éléments roulants 8 en glissant sur l'arbre 3 mais empêche un mouvement axial inverse par arc-boutement de la collerette radiale 20b sur l'arbre 3. On peut donc, lors du montage, disposer la rondelle frein 20 dans une position axiale déterminée sur l'arbre 3 pour appliquer une précontrainte axiale à la bague intérieure 6 par l'intermédiaire de l'élément d'amortissement 12, de la rondelle ondulée 14 et de la bague de tolérance 9.

La surface toroïdale 9b de la bague de tolérance 9 en contact avec la bague intérieure 6 provoque un effet de coin entre l'arbre 3 et la portion toroïdale 6b de la bague intérieure 6 ce qui assure une liaison satisfaisante entre l'arbre 3 et la bague intérieure 6 et empêche d'autre part tout déplacement radial intempestif de la bague de tolérance 9 tant que le palier à roulement n'est pas monté sur l'arbre.

On procède à l'assemblage du palier à roulement 1 de la façon suivante : on dispose la rangée d'éléments roulants 8 maintenue par la cage 15 sur le chemin 5 de la bague extérieure 4 avec retenue axiale mutuelle grâce aux crochets 17, on amène la bague intérieure 7 en contact avec les éléments roulants 8, on amène la bague de tolérance 9 en contact avec la bague intérieure 6 avec retenue axiale mutuelle grâce aux crochets 17 en contact avec la surface 19 de la bague de tolérance 9, on monte la rondelle ondulée 14 puis l'élément d'amortissement 12 autour de la surface cylindrique extérieure 9e, le bourrelet 13 franchissant le rebord 11 d'où retenue axiale de l'élément d'amortissement 12 sur la bague de tolérance 9, la rondelle ondulée 14 étant prise entre ces deux derniers éléments en étant pas ou peu mise en précontrainte axiale. L'élément d'amortissement 12 peut se déplacer axialement par rapport à la bague de tolérance 9 entre une position dans laquelle le bourrelet 13 et le rebord 11 sont en contact, voir figure1, et une position dans laquelle la rondelle ondulée 14 est complètement écrasée, voir figure 2.

Le sous-ensemble ainsi constitué ne risque pas de perdre de pièces, et peut être associé à la rondelle frein 20 qui est apte à coulisser sur l'arbre 3 dans un unique sens. La position finale de la rondelle frein 20 détermine la précontrainte exercée sur la bague de tolérance 9 en raison de la mise sous tension de la rondelle ondulée 14 par écrasement.

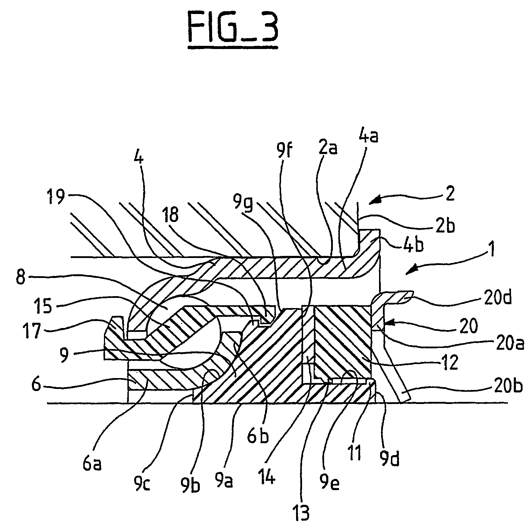

Dans la variante illustrée sur la figure 3, le palier à roulement est semblable à celui illustré sur les figures 1 et 2, à ceci près que la rondelle frein 20 est ici pourvue d'une portion cylindrique 20d s'étendant à partir de la périphérie de la portion radiale 20a à l'opposé des éléments roulants 8. On voit ainsi que l'on peut utiliser indifféremment une rondelle frein 20 à portion cylindrique rentrante (figures 1 et 2) ou sortante (figure 3), sans modifier les autres pièces du roulement 1. Il convient juste de prévoir un espace radial suffisant entre la surface extérieure 12b de l'élément d'amortissement 12 et la portion cylindrique 4a de la bague extérieure 4 pour pouvoir y disposer la portion cylindrique rentrante d'une rondelle frein. En d'autres termes, on peut utiliser différents modèles de rondelle frein avec un sous-ensemble de palier à roulement standardisé, ce qui permet de réduire les coûts de fabrication, de stockage et de manutention du sous-ensemble de palier à roulement.

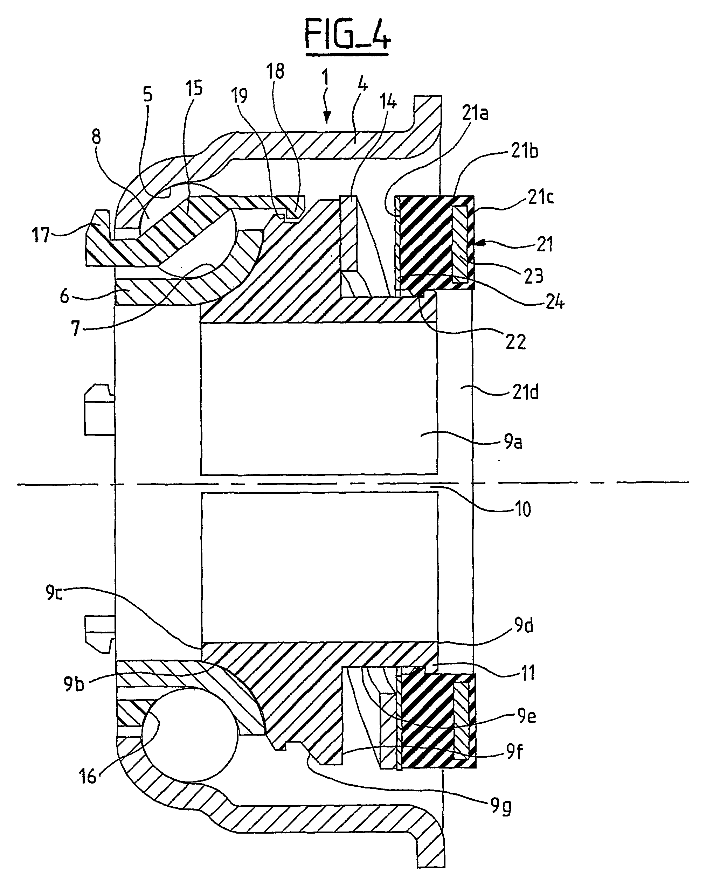

Dans le mode de réalisation illustré sur la figure 4, les références des éléments semblables à ceux des figures 1 et 2 ont été conservées.

L'élément d'amortissement 21 présente une forme générale semblable à celle de l'élément d'amortissement 12 avec deux surfaces radiales 21a et 21c et deux surfaces cylindriques, l'une extérieure 21b et l'autre intérieure 21d. La surface intérieure 2 1 d est pourvue d'un bourrelet annulaire 22 analogue au bourrelet annulaire 13 des figures 1 et 2. L'élément d'amortissement 21 est ici réalisé en matériau souple du type élastomère, caoutchouc, ... On obtient ainsi un excellent amortissement des vibrations.

Toutefois, pour conférer à l'élément d'amortissement 21 la rigidité nécessaire à une coopération satisfaisante avec les pièces voisines, on prévoit un insert métallique 23 se présentant sous la forme d'une rondelle plate noyée dans l'élément d'amortissement 21 à proximité de la surface radiale 21c du côté opposé aux éléments roulants 8, de diamètre inférieur légèrement supérieur à l'alésage de l'élément d'amortissement 21 et de diamètre extérieur légèrement inférieur au diamètre extérieur de l'élément d'amortissement 21. L'élément d'amortissement 21 peut ainsi coopérer avec une rondelle frein sans déformation excessive tout en assurant également une fonction d'appui avec transmission d'une contrainte axiale.

Une rondelle intermédiaire 24 est disposée entre la rondelle ondulée 14 et la surface radiale 21a située du côté des éléments roulants 8. La rondelle intermédiaire 24 est de type plate avec un diamètre extérieur et un alésage sensiblement égaux à ceux de l'élément d'amortissement 21. La rondelle intermédiaire 24 offre à la rondelle ondulée 14 une surface d'appui répartissant convenablement les efforts et réduisant ainsi la déformation circonférentielle de l'élément d'amortissement 21.

Pour des raisons d'économie, la rondelle intermédiaire 24 sera de préférence montée libre entre la rondelle ondulée 14 et l'élément d'amortissement 21, la rondelle ondulée 14 assurant son contact avec la surface radiale 21a. Toutefois, on pourrait également prévoir de fixer la rondelle intermédiaire 24 sur l'élément d'amortissement 21, par collage ou encore par surmoulage.

Avec un tel palier à roulement, peut être utilisée une rondelle frein à portion cylindrique rentrante ou sortante, comme dans le mode de réalisation précédent.

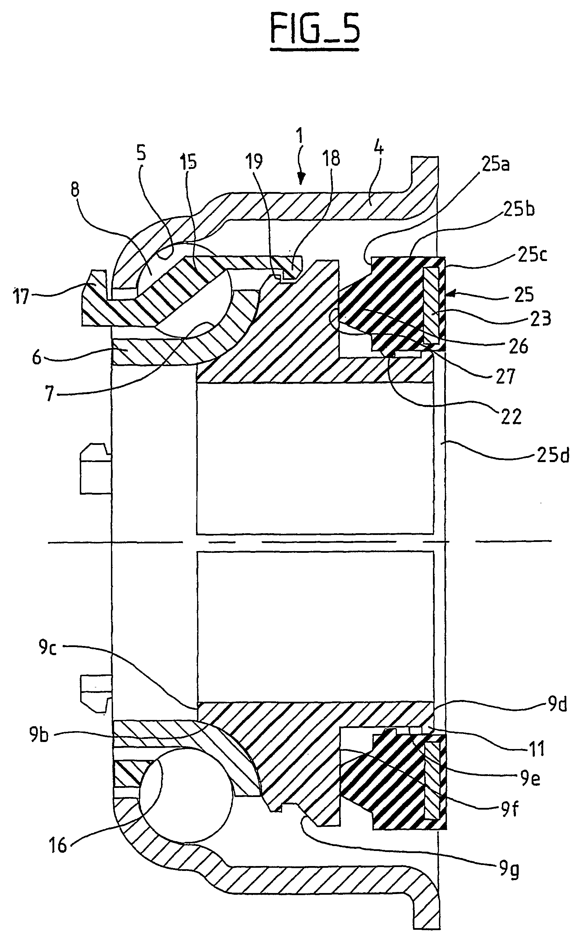

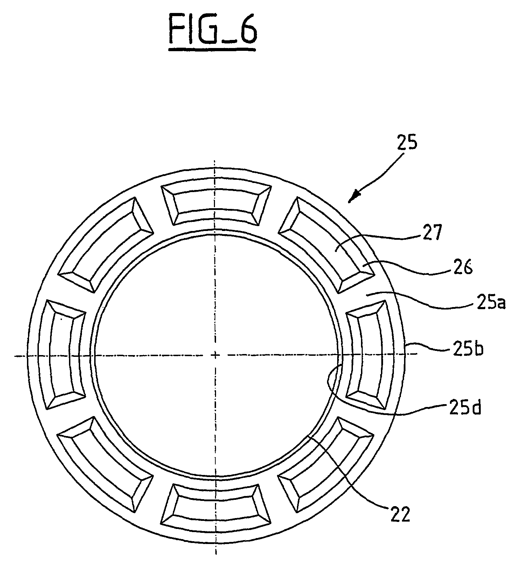

Dans le mode de réalisation illustré sur les figures 5 et 6, les éléments semblables à ceux du mode de réalisation précédent portent les mêmes références. L'élément d'amortissement 25 est proche de l'élément d'amortissement 21, illustré sur la figure 4, à ceci près qu'il comprend une pluralité de plots 26, formés de façon monobloc avec le reste de l'élément d'amortissement 25 et issus de sa surface radiale 25a située du côté des éléments roulants 8 en formant des protubérances dirigées en direction de la surface radiale 9f de la bague de tolérance 9. Ici, il est prévu huit plots 26 circonférentiellement répartis et séparés les uns des autres. Les plots 26 présentent, en coupe axiale (figure 5) une section trapézoïdale avec une base située du côté de la surface radiale 25a et un sommet 27 situé du côté de la surface radiale 9f de la bague de tolérance 9. En vue de face (figure 6), les plots 26 se présentent sous la forme de secteurs angulaires. Le sommet 27 des plots 26 est disposé dans un plan radial et est apte à entrer en contact direct avec la surface radiale 9f de la bague de tolérance 9.

La forme de l'élément d'amortissement 25 lui confère une bonne flexibilité dans le sens axial, notamment grâce aux plots 26, ce qui permet de supprimer la rondelle ondulée et la rondelle intermédiaire du mode de réalisation précédent. L'élément d'amortissement 25 est donc disposé directement sur la bague de tolérance 9 en contact axial avec la surface radiale 9f d'appui de ladite bague de tolérance 9 par l'intermédiaire des plots 26. Ce mode de réalisation est de montage très simple grâce à la diminution du nombre de pièces. L'élément 25 assure à la fois l'amortissement des vibrations, l'appui sur une rondelle frein, non représentée, et la précontrainte élastique grâce à sa déformation élastique dans le sens axial. Comme précédemment, le palier à roulement 1 peut être utilisé avec différents modèles de rondelle frein, à portion cylindrique rentrante ou sortante, de dimension axiale variable.

Grâce à l'invention, on dispose d'un palier à roulement de colonne de direction assurant un bon amortissement des vibrations, particulièrement dans le sens axial, et susceptible d'amortir les chocs en cas d'accident du véhicule impliquant une décélération longitudinale brutale.

L'élément d'amortissement étant distinct de la bague de tolérance sur laquelle il est rapporté, il peut en outre être utilisé avantageusement pour assurer la retenue axiale de certains éléments comme par exemple une rondelle élastique de mise en précontrainte du roulement.

Enfin, un même élément de base de palier à roulement s'accomode de rondelle frein de dimensions ou de types différents, d'où une économie grâce à la standardisation que l'on peut réaliser.

## Revendications

1. Palier à roulement (1) à contact oblique, notamment pour colonne de direction de véhicules automobiles, du type comprenant une bague extérieure (4) pourvue d'un chemin de roulement, une bague intérieure (6) pourvue d'un chemin de roulement, une rangée d'éléments roulants (8) disposés entre les chemins de roulement desdites bagues, et une bague de tolérance (9) destinée à assurer la liaison de la bague intérieure avec un arbre de la colonne de direction, **caractérisé par le fait qu'**il comprend un élément d'amortissement (12) disposé en contact avec la bague de tolérance (9), à l'extrémité axiale du palier opposée aux éléments roulants(8), ledit élément d'amortissement étant distinct de la bague de tolérance.

2. Palier selon la revendication 1, **caractérisé par le fait qu'**il comprend une rondelle frein (20) pour bloquer le palier axialement sur l'arbre, l'élément d'amortissement étant disposé axialement entre la rondelle frein et la bague de tolérance.

3. Palier selon la revendication 1 ou 2, **caractérisé par le fait que** l'élément d'amortissement est mobile axialement par rapport à la bague de tolérance.

4. Palier selon l'une quelconque des revendications précédentes, **caractérisé par le fait que** l'élément d'amortissement est disposé autour d'une partie de la bague de tolérance située à l'opposé des éléments roulants.

5. Palier selon l'une quelconque des revendications précédentes, **caractérisé par le fait que** l'élément d'amortissement comprend des moyens de retenue axiale sur la bague de tolérance.

6. Palier selon l'une quelconque des revendications précédentes, **caractérisé par le fait que** l'élément d'amortissement est réalisé en matériau souple, préférablement synthétique ou à base de caoutchouc.

7. Palier selon l'une quelconque des revendications précédentes, **caractérisé par le fait que** l'élément d'amortissement comprend un insert métallique (23).

8. Palier selon l'une quelconque des revendications précédentes, **caractérisé par le fait que** l'élément d'amortissement comprend une face radiale destinée à l'appui sur la rondelle frein.

9. Palier selon l'une quelconque des revendications précédentes, **caractérisé par le fait qu'**il comprend une rondelle élastique (14) axialement disposée entre l'élément d'amortissement et la bague de tolérance.

10. Palier selon la revendication 9, **caractérisé par le fait qu'**il comprend une rondelle (24) disposée entre l'élément d'amortissement et la rondelle élastique.

11. Palier selon l'une quelconque des revendications 1 à 8, **caractérisé par le fait que** l'élément d'amortissement (25) est en appui direct sur la bague de tolérance et assure la précontrainte axiale du roulement.

## Patentansprüche

1. Schrägwälzlager (1), insbesondere für eine Lenksäule von Kraftfahrzeugen, von der Art mit einem eine Laufbahn aufweisenden Außenring (4), einem eine Laufbahn aufweisenden Innenring (6), einer Reihe von Wälzkörpern (8), die zwischen den Laufbahnen der Ringe angeordnet sind, und einem Ausgleichsring (9), der dazu vorgesehen ist, die Verbindung zwischen dem Innenring und einer Lenkspindel der Lenksäule sicherzustellen, **dadurch gekennzeichnet, dass** es ein Dämpfungselement (12) aufweist, das mit dem Ausgleichsring (9) in Berührung an dem den Wälzkörpern (8) entgegengesetzten axialen Ende des Lagers angeordnet ist, wobei sich das Dämpfungselement von dem Ausgleichsring unterscheidet.

2. Lager nach Anspruch 1, **dadurch gekennzeichnet, dass** es eine Sicherungsscheibe (20) aufweist, um das Lager auf der Lenkspindel in axialer Richtung festzusetzen, wobei das Dämpfungselement axial zwischen der Sicherungsscheibe und dem Ausgleichsring angeordnet ist.

3. Lager nach Anspruch 1 oder 2, **dadurch gekennzeichnet, dass** das Dämpfungselement in Bezug auf den Ausgleichsring axial bewegbar ist.

4. Lager nach einem der vorhergehenden Ansprüche, **dadurch gekennzeichnet, dass** das Dämpfungselement um einen Abschnitt des Ausgleichsrings herum angeordnet ist, der sich auf der den Wälzkörpern abgewandten Seite befindet.

5. Lager nach einem der vorhergehenden Ansprüche, **dadurch gekennzeichnet, dass** das Dämpfungselement Mittel zur axialen Sicherung an dem Ausgleichsring aufweist.

6. Lager nach einem der vorhergehenden Ansprüche, **dadurch gekennzeichnet, dass** das Dämpfungselement aus einem elastischen Material, vorzugsweise einem synthetischen oder einem auf Kautschuk basierenden Werkstoff, verwirklicht ist.

7. Lager nach einem der vorhergehenden Ansprüche, **dadurch gekennzeichnet, dass** das Dämpfungselement einen metallischen Einsatz (23) aufweist.

8. Lager nach einem der vorhergehenden Ansprüche, **dadurch gekennzeichnet, dass** das Dämpfungselement eine Radialfläche aufweist, die zur Anlage an der Sicherungsscheibe vorgesehen ist.

9. Lager nach einem der vorhergehenden Ansprüche, **dadurch gekennzeichnet, dass** es eine axial elastische Scheibe (14) aufweist, die zwischen dem Dämpfungselement und dem Ausgleichsring eingefügt ist.

10. Lager nach Anspruch 9, **dadurch gekennzeichnet, dass** es eine Scheibe (24) aufweist, die zwischen dem Dämpfungselement und der elastischen Scheibe angeordnet ist.

11. Lager nach einem der Ansprüche 1 bis 8, **dadurch gekennzeichnet, dass** sich das Dämpfungselement (25) unmittelbar an dem Ausgleichsring abstützt und die axiale Vorspannung des Wälzlagers sicherstellt.

## Claims

1. Angular contact rolling bearing (1) particularly for a motor vehicle steering column, of the type comprising a outer ring (4) provided with a raceway, an inner ring (6) provided with a raceway, a row of rolling elements (8) arranged between the raceways of the said rings, and a tolerance ring (9) intended to make the connection between the inner ring and a shaft of the steering column, **characterized in that** it comprises a shock-absorbing element (12) arranged in contact with the tolerance ring (9) at the opposite axial end of the bearing to the rolling elements (8), the said shock-absorbing element being distinct from the tolerance ring.

2. Bearing according to Claim 1, **characterized in that** it comprises a locking washer (20) to axially immobilize the bearing on the shaft, the shock-absorbing element being arranged axially between the locking washer and the tolerance ring.

3. Bearing according to Claim 1 or 2, **characterized in that** the shock-absorbing element can move axially with respect to the tolerance ring.

4. Bearing according to any one of the preceding claims, **characterized in that** the shock-absorbing element is arranged around a part of the tolerance ring situated away from the rolling elements.

5. Bearing according to any one of the preceding claims, **characterized in that** the shock-absorbing element comprises means of axial retention on the tolerance ring.

6. Bearing according to any one of the preceding claims, **characterized in that** the shock-absorbing element is made of a flexible material, preferably a synthetic one or one based on rubber.

7. Bearing according to any one of the preceding claims, **characterized in that** the shock-absorbing element comprises a metallic insert (23).

8. Bearing according to any one of the preceding claims, **characterized in that** the shock-absorbing element comprises a radial face intended to bear against the locking washer.

9. Bearing according to any one of the preceding claims, **characterized in that** it comprises an elastic washer (14) arranged axially between the shock-absorbing element and the tolerance ring.

10. Bearing according to Claim 9, **characterized in that** it comprises a washer (24) arranged between the shock-absorbing element and the elastic washer.

11. Bearing according to any one of Claims 1 to 8, **characterized in that** the shock-absorbing element (25) bears directly against the tolerance ring and axially prestresses the rolling bearing.
